# EUROPÄISCHE PATENTSCHRIFT

(11) **EP 1 477 694 B1**
(45) Veröffentlichungstag und Bekanntmachung des Hinweises auf die Patenterteilung: **14.03.2012**
(21) Anmeldenummer: 04009249.6
(22) Anmeldetag: 20.04.2004
(51) Int. Cl.: F16C 33/80, F16C 19/46

(54) **Dichtungsanordnung zur Abdichtung eines Spalts zwischen einer Lagerbüchse und einem Zapfen**
Sealing arrangement for sealing the gap between a bearing bush and shaft
Dispositif d'étanchéité pour l'interstice entre manchon de palier et un axe

(30) Priorität: 13.05.2003 DE 20307396 U
(43) Veröffentlichungstag der Anmeldung: 17.11.2004
(73) Patentinhaber: AB SKF, 415 50 Göteborg (SE)
(72) Erfinder: Bauer, Bernhard, 97437 Hassfurt (DE); Gebauer, Horst, 97529 Sulzheim (DE); Streit, Winfried, 97711 Massbach (DE)
(74) Vertreter: Kohl, Thomas

(56) Entgegenhaltungen:
- EP-A- 0 773 379
- DE-A1- 4 128 179
- DE-A1- 19 701 461
- DE-U1- 20 307 396
- US-A- 6 050 899

## Beschreibung

Die Erfindung betrifft eine Vorrichtung mit einer Lagerbüchse, einem drehbar in der Lagerbüchse gelagerten Zapfen und einer Dichtungsanordnung zur Abdichtung eines Spalts zwischen der Lagerbüchse und dem Zapfen.

Eine derartige Vorrichtung kann insbesondere bei einem Kreuzgelenk eingesetzt werden. Um eine dauerhafte Funktionsfähigkeit des Kreuzgelenks sicher zu stellen, ist es nämlich erforderlich, den konstruktionsbedingt jeweils zwischen der Lagerbüchse und dem Zapfen vorhandenen Spalt zuverlässig abzudichten. Die dabei jeweils eingesetzte Dichtungsanordnung soll zum einen ein Austreten des innerhalb der Lagerbüchse vorgehaltenen Schmiermittels verhindern und zum anderen ein Eindringen von Verunreinigungen aus der Umgebung in das Innere der Lagerbüchse ausschließen oder zumindest auf ein vertretbares Maß reduzieren.

Dichtungsanordnungen für Kreuzgelenke sind in vielfältigen Ausführungsformen bekannt. So offenbart die DE 195 42 100 C1 beispielsweise eine Dichtungsanordnung, die auf dem Zapfen des Kreuzgelenks fest aufsitzt und zwei an der inneren Mantelfläche der Lagerbüchse anlaufende Dichtlippen sowie eine an der äußeren Mantelfläche der Lagerbüchse anlaufende Dichtlippe aufweist. Durch eine Ringausnehmung in der Dichtung werden die Dichtlippen, die an der inneren Mantelfläche der Lagerbüchse anlaufen, weitgehend von dem Bereich der Dichtung entkoppelt, der auf dem Zapfen aufsitzt.

Aus der EP-A-0 773 379 ist eine Dichtungsanordnung für das Zapfenkreuz eines Kreuzgelenkes bekannt, welche drehfest mit dem Zapfen verbunden ist und hierzu auf einer Sitzfläche aufsitzt. Die bekannte Dichtung umgreift die offene Stirnseite der Lagerbüchse und liegt mit einer Dichtlippe auf deren Außenfläche an.

Die EP-A-0773379 offenbart damit eine Vorrichtung nach dem Oberbegriff des Anspruchs 1.

Zwar ist es mit den bekannten Dichtungskonstruktionen möglich, eine zufriedenstellende Abdichtung des Spalts zwischen der Lagerbüchse und dem Zapfen zu erreichen. Allerdings steigen mit der geforderten Zuverlässigkeit der Dichtungsanordnung der dafür erforderliche Aufwand und damit auch die Kosten in der Regel sehr stark an. Außerdem ist die zunehmende Komplexität häufig mit Montageproblemen verbunden, für deren Behebung weiterer Aufwand erforderlich ist.

Der Erfindung liegt daher die Aufgabe zu Grunde, eine sehr zuverlässige Abdichtung des Spalts zwischen einer Lagerbüchse und einem drehbar in der Lagerbüchse gelagerten Zapfen anzugeben, die mit einem vertretbaren Aufwand realisierbar ist.

Diese Aufgabe wird durch die Merkmalskombination des Anspruchs 1 gelöst.

Die erfindungsgemäße Vorrichtung weist eine Lagerbüchse, einen drehbar in der Lagerbüchse gelagerten Zapfen und eine Dichtungsanordnung zur Abdichtung eines Spalts zwischen der Lagerbüchse und dem Zapfen auf. Die Dichtungsanordnung weist einen Dichtkörper auf, der dichtend und drehfest mit dem Zapfen verbunden ist. Weiterhin weist die Dichtungsanordnung eine erste Dichtkante auf, die an einer ersten Anlauffläche im Innenbereich der Lagerbüchse anläuft sowie eine zweite Dichtkante, die an einer zweiten Anlauffläche im Außenbereich der Lagerbüchse anläuft. Die Besonderheit der erfindungsgemäßen Vorrichtung besteht darin, dass eine dritte Dichtkante vorgesehen ist, die an einer dritten Anlauffläche anläuft, welche an einem drehfest mit der Lagerbüchse verbundenen Maschinenteil ausgebildet ist.

Die Erfindung hat den Vorteil, dass eine sehr zuverlässige Abdichtung des Innenraums der Lagerbüchse gewährleistet wird und dabei sowohl ein potentieller Schmiermittelaustritt aus der Lagerbüchse als auch ein Eindringen von Verunreinigungen aus der Umgebung in die Lagerbüchse extrem erschwert wird. Ein weiterer Vorteil besteht darin, dass die Dichtungsanordnung trotz ihrer guten Dichtwirkung vergleichsweise kostengünstig herstellbar ist und sehr einfach zu montieren ist.

In einem bevorzugten Ausführungsbeispiel stützt sich das Maschinenteil in einer Axialrichtung formschlüssig auf die Lagerbüchse ab. Dabei kann durch das Maschinenteil einen Axialanschlag für ein elastisches Element ausgebildet sein, gegen das zwischen dem Zapfen und der Lagerbüchse angeordnete Wälzkörper anlaufen. Dies hat den Vorteil, dass ein separater Axialanschlag eingespart werden kann und somit die Zahl der Komponenten in einem vertretbaren Rahmen gehalten werden kann.

Das Maschinenteil ist vorzugsweise aus Blech gefertigt und damit kostengünstig herstellbar und von hoher mechanischer Stabilität. Insbesondere ist das Maschinenteil als ein Ring mit einer axialen Vertiefung ausgebildet. Durch die Vertiefung kann die Dichtwirkung wesentlich verbessert werden, da sich darin austretendes Schmiermittel bzw. eindringende Verunreinigungen sammeln, so dass deren weiteres Vordringen nur bei einer Überwindung der Vertiefung möglich ist. Dabei kann das Maschinenteil beispielsweise einen U-förmigen Querschnitt aufweisen und ist vorzugsweise axial neben den Dichtkörper angeordnet, wobei die Vertiefung des Maschinenteils insbesondere zum Dichtkörper hin offen ist.

Die dritte Anlauffläche kann im Inneren der Vertiefung des Maschinenteils ausgebildet sein, wobei es besonders vorteilhaft ist, wenn die dritte Anlauffläche auf einer die Vertiefung des Maschinenteils radial nach innen begrenzenden Seitenwand ausgebildet ist. Dadurch wird eine zusätzliche Barriere geschaffen, die ein Austreten des Schmiermittels aus dem Innenraum der Lagerbüchse in die Vertiefung bzw. ein Eindringen der in der Vertiefung angesammelten Verunreinigungen in das Innere der Lagerbüchse erschwert.

Die zweite Anlauffläche kann in einer auf der äußeren Mantelfläche der Lagerbüchse umlaufenden Radialnut ausgebildet sein. Dies hat den Vorteil, dass die gegen die zweite Anlauffläche anlaufende zweite Dichtkante gut vor äußeren Einwirkungen geschützt ist.

Die erste, zweite und dritte Dichtkante können einteilig mit dem Dichtkörper ausgebildet sein, so dass eine kostengünstige Herstellung der Dichtungsanordnung möglich ist. Vorzugsweise sind die erste, zweite und dritte Dichtkante jeweils an je einer separat am Dichtkörper ausgebildeten Dichtlippe angeformt. Dadurch wird erreicht, dass die Vorspannung, mit der die einzelnen Dichtkanten gegen die zugehörigen Anlaufflächen gepresst werden unabhängig voneinander vorgegeben werden können und somit auf einen jeweils optimalen Wert eingestellt werden können.

Der Dichtkörper kann mit einem Stützelement verbunden sein. Dabei ist es besonders vorteilhaft, wenn das Stützelement den Dichtkörper auf dessen der Umgebung zugewandten Seite wenigstens bereichsweise umgibt. Auf diese Weise kann das Stützelement neben seiner stützenden Funktion zusätzlich eine Schutzfunktion ausüben und den Dichtkörper vor schädigenden äußeren Einwirkungen abschirmen. Die Doppelfunktion des Stützelements trägt wiederum zur Reduzierung der Komponenten und damit auch der Herstellungskosten bei. Die dem Stützelement zugedachten Funktionen lassen sich besonders gut erfüllen, wenn das Stützelement einen im wesentlichen U-förmigen Querschnitt aufweist.

Gemäß einem Ausführungsbeispiel ist der Dichtkörper auf einem zylindrisch ausgebildeten Abschnitt des Zapfens angeordnet. Gemäß einem weiteren Ausführungsbeispiel sitzt der Dichtkörper mit zwei an den Dichtkörper angeformten, ringförmig umlaufenden Fortsätzen auf einem konischen Abschnitt des Zapfens auf. Die erfindungsgemäße Vorrichtung kann somit sowohl Zapfen mit einer zylindrischen als auch Zapfen mit einer konischen Sitzfläche aufweisen.

Die Erfindung bezieht sich weiterhin auf ein Kreuzgelenk mit mehreren erfindungsgemäßen Vorrichtungen.

Die Erfindung wird nachstehend anhand der in der Zeichnung dargestellten Figuren näher erläutert.

Es zeigen:
- Figur 1: ein Kreuzgelenk mit einem ersten Ausführungsbeispiel der erfindungsgemäßen Dichtungsanordnung in Schnittdarstellung,
- Figur 2: einen vergrößerten Ausschnitt der Figur 1 und
- Figur 3: ein Kreuzgelenk mit einem zweiten Ausführungsbeispiel der erfindungsgemäßen Dichtungsanordnung in einer Figur 2 entsprechenden Darstellung.

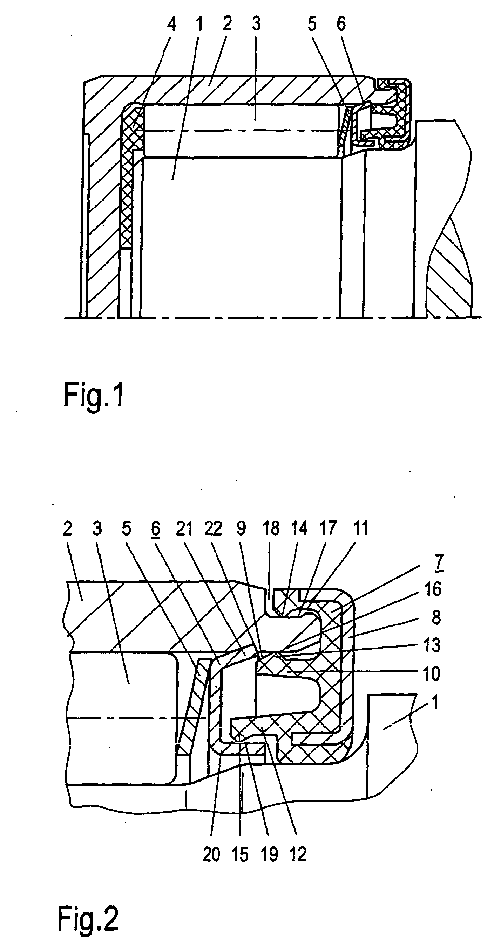

Figur 1 zeigt ein Kreuzgelenk mit einem ersten Ausführungsbeispiel der erfindungsgemäßen Dichtungsanordnung in Schnittdarstellung. Dabei ist nicht das gesamte Kreuzgelenk sondern lediglich der Bereich eines Zapfens 1 dargestellt, der in einer Lagerbüchse 2 drehbar gelagert ist. Hierzu sind zwischen dem Zapfen 1 und der Lagerbüchse 2 zylinderförmige Wälzkörper 3 angeordnet. Der Zapfen 1 und die Wälzkörper 3 laufen jeweils axial gegen eine Anlaufscheibe 4 am Boden der Lagerbüchse 2 an. In der entgegengesetzten Axialrichtung stützen sich die Wälzkörper 3 auf eine Tellerfeder 5 ab. Die Tellerfeder 5 schlägt axial an einen Haltering 6 an, der ein Bestandteil der erfindungsgemäßen Dichtungsanordnung ist und in Figur 2 zusammen mit den anderen Komponenten der Dichtungsanordnung nochmals vergrößert dargestellt ist.

Figur 2 zeigt einen vergrößerten Ausschnitt der Figur 1 im Bereich der erfindungsgemäßen Dichtungsanordnung. Zusätzlich zum Haltering 6 weist die erfindungsgemäße Dichtungsanordnung einen Dichtkörper 7 auf, der drehfest und dichtend mit einem zylindrischen Abschnitt des Zapfens 1 verbunden ist. In dem in Figur 2 dargestellten montierten Zustand sitzt der Dichtkörper 7 flächig auf dem Zapfen 1 auf. Zum Ausgleich von Toleranzen und zur Erleichterung der Montage weist die für die Anlage an den Zapfen 1 vorgesehene Radialfläche des Dichtkörpers 7 im unmontierten Zustand eine Rillenstruktur auf, die bei der Montage glatt gedrückt wird. Der Dichtkörper 7 besteht aus einem Elastomermaterial und weist einen fest mit dem Dichtkörper 7 verbundenen Stützring 8 auf, der vorzugsweise als ein Blechteil ausgebildet ist. Zur Abdichtung eines ringförmigen Spaltes 9 zwischen dem Zapfen 1 und der Lagerbüchse 2 sind eine erste Dichtlippe 10, eine zweite Dichtlippe 11 und eine dritte Dichtlippe 12 vorgesehen, die einteilig mit dem Dichtkörper 7 ausgebildet sind und in eine erste Dichtkante 13, eine zweite Dichtkante 14 und eine dritte Dichtkante 15 auslaufen. Die erste Dichtkante 13 läuft gegen eine erste Anlauffläche 16 an, die auf der inneren Mantelfläche der Lagerbüchse 2 ausgebildet ist. Die zweite Dichtkante 14 läuft gegenüber der ersten Dichtkante 13 gegen eine zweite Anlauffläche 17 auf der äußeren Mantelfläche der Lagerbüchse 2 an. Die zweite Anlauffläche 17 ist am Boden einer auf der äußeren Mantelfläche 2 umlaufenden Radialnut 18 angeordnet. Die dritte Dichtkante 15 läuft gegen eine dritte Anlauffläche 19 am Haltering 6 an. Hierzu ist der Haltering 6 im Querschnitt U-förmig ausgebildet und derart axial neben dem Dichtkörper 7 angeordnet, dass sich das "U" zum Dichtkörper 7 hin öffnet. Eine derartige Form des Halterings 6 lässt sich beispielsweise mittels eines Blechteils leicht realisieren. Die dritte Anlauffläche 19 ist innerhalb des "U" am radial inneren Schenkel 20 ausgebildet, der parallel zur Axialrichtung orientiert ist. Mit seinem radial äußeren Schenkel 21, der einen Winkel mit der Axialrichtung einschließt, stützt sich der Haltering in einer Axialrichtung in einer Kerbe 22 der Lagerbüchse 2 ab.

Im Innenbereich der Lagerbüchse 2 angeordneter Schmierstoff könnte erst nach Überwindung aller drei Dichtkanten 13, 14 und 15 nach außen gelangen. Ebenso müssten Schmutzstoffe aus der Umgebung der Reihe nach alle drei Dichtkanten 13, 14 und 15 überwinden, um in den Innenbereich der Lagerbüchse 2 vorzudringen. Dies hat zur Folge, dass mit der erfindungsgemäßen Dichtungsanordnung eine sehr hohe Dichtwirkung erreicht wird. Diese Dichtwirkung wird durch die zur Umgebung hin offene U-Form des Halterings 21 noch weiter erhöht, da die in Folge der Drehbewegung des Kreuzgelenks auftretenden Zentrifugalkräfte bewirken, dass sich sowohl austretendes Schmiermittel als auch eindringende Schmutzstoffe im Innenbereich des "U" ansammeln und dadurch ein weiterer Austritt bzw. ein weiteres Eindringen erschwert wird.

Der Stützring 8 ist ähnlich wie der Haltering 6 im Querschnitt ebenfalls U-förmig ausgebildet, aber entgegengesetzt zum Haltering 6 orientiert. Diese Formgebung ermöglicht es, dass der Stützring 8 nahezu den gesamten Außenbereich des Dichtkörpers 7 umschließt und ihn dadurch zuverlässig vor schädigenden äußeren Einflüssen schützt. Eine zuverlässige mechanische Verbindung zwischen dem Dichtkörper 7 und dem Stützring 8 wird dadurch erreicht, dass der Dichtkörper 7 an den Stützring 8 angespritzt wird.

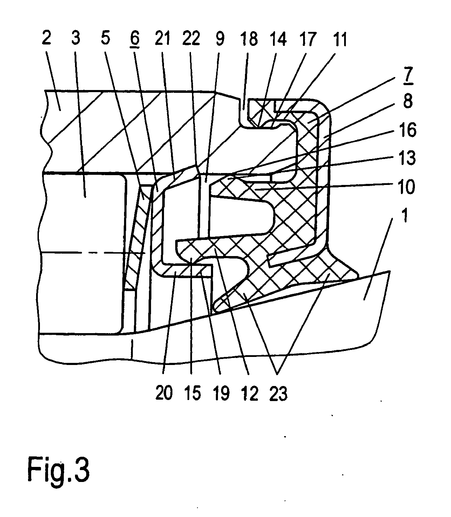

Figur 3 zeigt ein Kreuzgelenk mit einem zweiten Ausführungsbeispiel der erfindungsgemäßen Dichtungsanordnung in einer Figur 2 entsprechenden Darstellung. Das zweite Ausführungsbeispiel unterscheidet sich von dem in den Figuren 1 und 2 dargestellten ersten Ausführungsbeispiel der Dichtungsanordnung dadurch, dass der Dichtkörper 7 nicht auf einem zylindrischen Abschnitt, sondern auf einem konischen Abschnitt des Zapfens 1 angeordnet und drehfest und dichtend mit diesem verbunden ist. Um für diese Geometrie einen sicheren Sitz des Dichtkörpers 7 auf dem Zapfen 1 zu gewährleisten, weist der Dichtkörper 7 zwei ringförmig umlaufende Fortsätze 23 auf, die miteinander einen stumpfen Winkel einschließen und schräg zum Zapfen 1 hin orientiert sind. Die Fortsätze 23 stehen radial unterschiedlich weit vor und sind in Radialrichtung elastisch nachgebend ausgebildet. Dadurch wird erreicht, dass sich die Fortsätze 23 sehr gut an die äußere Form des Zapfens 1 anschmiegen können. Dies ist in sofern von Bedeutung, als die relative axiale Position zwischen dem Zapfen 1 und dem Dichtkörper 7 bei der Montage geringfügig variieren kann und somit der Außendurchmesser des Zapfens 1, an dem die Fortsätze 23 des Dichtkörpers 7 anliegen, nicht genau definiert ist. Außerdem hat die Formgebung der Fortsätze 23 zur Folge, dass sich der Dichtkörper 7 bei der Montage am Zapfen 1 festsaugt und dadurch verdrehsicher am Zapfen 1 fixiert wird. Um eine möglichst optimale Stützung des Dichtkörpers 7 auch in der Nähe der Fortsätze 23 zu erzielen, weicht der Stützring 8 im Querschnitt geringfügig von einer symmetrischen U-Form ab und verläuft bereichsweise in etwa parallel zum konischen Abschnitt des Zapfens 1.

Prinzipiell besteht auch die Möglichkeit, bei der in Figur 1 und 2 dargestellten Anordnung des Dichtkörpers 7 auf einem zylindrischen Abschnitt des Zapfens 1 am Dichtkörper 7 entsprechend dem zweiten Ausführungsbeispiel Fortsätze 23 auszubilden. In diesem Fall werden die Fortsätze 23 bevorzugt so ausgebildet, dass sie in Radialrichtung gleichweit vorstehen.

### Bezugszeichen

- 1: Zapfen
- 2: Lagerbüchse
- 3: Wälzkörper
- 4: Anlaufscheibe
- 5: Tellerfeder
- 6: Haltering
- 7: Dichtkörper
- 8: Stützring
- 9: Spalt
- 10: erste Dichtlippe
- 11: zweite Dichtlippe
- 12: dritte Dichtlippe
- 13: erste Dichtkante
- 14: zweite Dichtkante
- 15: dritte Dichtkante
- 16: erste Anlauffläche
- 17: zweite Anlauffläche
- 18: Radialnut
- 19: dritte Anlauffläche
- 20: erster Schenkel des Halterings 6
- 21: zweiter Schenkel des Halterings 6
- 22: Kerbe
- 23: Fortsätze

## Patentansprüche

1. Vorrichtung mit einer Lagerbüchse (2), einem drehbar in der Lagerbüchse (2) gelagerten Zapfen (1)und einer Dichtungsanordnung zur Abdichtung eines Spalts (9) zwischen der Lagerbüchse (2) und dem Zapfen (1), mit
- einem Dichtkörper (7), der dichtend und drehfest mit dem Zapfen (1) verbunden ist,
- einer ersten Dichtkante (13), die an einer ersten Anlauffläche (16) im Innenbereich der Lagerbüchse (2) anläuft,
- einer zweiten Dichtkante (14), die an einer zweiten Anlauffläche (17) im Außenbereich der Lagerbüchse (2) anläuft,
**dadurch gekennzeichnet, dass** eine dritte Dichtkante (15) vorgesehen ist, die an einer dritten Anlauffläche (19) anläuft, welche an einem drehfest mit der Lagerbüchse (2) verbundenen Maschinenteil (6) ausgebildet ist.

2. Vorrichtung nach Anspruch 1, **dadurch gekennzeichnet, dass** sich das Maschinenteil (6) in einer Axialrichtung formschlüssig auf die Lagerbüchse (2) abstützt.

3. Vorrichtung nach einem der vorhergehenden Ansprüche, **dadurch gekennzeichnet, dass** durch das Maschinenteil (6) ein Axialanschlag für ein elastisches Element (5) ausgebildet ist, gegen das zwischen dem Zapfen (1) und der Lagerbüchse (2) angeordnete Wälzkörper (3) anlaufen.

4. Vorrichtung nach einem der vorhergehenden Ansprüche, **dadurch gekennzeichnet, dass** das Maschineteil (6) aus Blech gefertigt ist.

5. Vorrichtung nach einem der vorhergehenden Ansprüche, **dadurch gekennzeichnet, dass** das Maschinenteil (6) als ein Ring mit einer axialen Vertiefung ausgebildet ist.

6. Vorrichtung nach einem der vorhergehenden Ansprüche, **dadurch gekennzeichnet, dass** das Maschinenteil (6) einen U-förmigen Querschnitt aufweist.

7. Vorrichtung nach einem der vorhergehenden Ansprüche, **dadurch gekennzeichnet, dass** das Maschinenteil (6) axial neben dem Dichtkörper (7) angeordnet ist.

8. Vorrichtung nach einem der Ansprüche 5 bis 7, **dadurch gekennzeichnet, dass** die Vertiefung des Maschinenteils (6) zum Dichtkörper (7) hin offen ist.

9. Vorrichtung nach einem der Ansprüche 5 bis 8, **dadurch gekennzeichnet, dass** die dritte Anlauffläche (19) im Inneren der Vertiefung ausgebildet des Maschinenteils (6) ist.

10. Vorrichtung nach Anspruch 9, **dadurch gekennzeichnet, dass** die dritte Anlauffläche (19) auf einer die Vertiefung des Maschinenteils (6) radial nach innen begrenzenden Seitenwand (20) ausgebildet ist.

11. Vorrichtung nach einem der vorhergehenden Ansprüche, **dadurch gekennzeichnet, dass** die zweite Anlauffläche (17) in einer auf der äußeren Mantelfläche der Lagerbüchse (2) umlaufenden Radialnut (18) ausgebildet ist.

12. Vorrichtung nach einem der vorhergehenden Ansprüche, **dadurch gekennzeichnet, dass** der erste (13), zweite (14) und dritte (15) Dichtkante einteilig mit dem Dichtkörper (7) ausgebildet sind.

13. Vorrichtung nach einem der vorhergehenden Ansprüche, **dadurch gekennzeichnet, dass** die erste (13), zweite (14) und dritte (15) Dichtkante jeweils an einer separat am Dichtkörper (7) ausgebildeten Dichtlippe (10, 11, 12) angeformt sind.

14. Vorrichtung nach einem der vorhergehenden Ansprüche, **dadurch gekennzeichnet, dass** der Dichtkörper (7) mit einem Stützelement (8) verbunden ist.

15. Vorrichtung nach Anspruch 14, **dadurch gekennzeichnet, dass** das Stützelement (8) den Dichtkörper (7) auf dessen der Umgebung zugewandten Seite wenigstens bereichsweise umgibt.

16. Vorrichtung nach einem der Ansprüche 14 oder 15, **dadurch gekennzeichnet, dass** das Stützelement (8) einen im wesentlichen U-förmigen Querschnitt aufweist.

17. Vorrichtung nach einem der vorhergehenden Ansprüche, **dadurch gekennzeichnet, dass** der Dichtkörper (7) auf einem zylindrisch ausgebildeten Abschnitt des Zapfens (1) angeordnet ist.

18. Vorrichtung nach einem der Ansprüche 1 bis 16, **dadurch gekennzeichnet, dass** der Dichtkörper (7) mit zwei an den Dichtkörper (7) angeformten, ringförmig umlaufenden Fortsätze (23) auf einem konischen Abschnitt des Zapfens (1) aufsitzt.

19. Kreuzgelenk mit Vorrichtungen, die jeweils einen drehbar in einer Lagerbüchse (2) gelagerten Zapfen (1) und eine Dichtungsanordnung aufweisen, **dadurch gekennzeichnet, dass** die Vorrichtungen jeweils nach einem der vorhergehenden Ansprüche ausgebildet sind.

## Claims

1. Device with a bearing bush (2), a pin (1) mounted rotatably in the bearing bush (2), and a sealing arrangement for sealing a gap (9) between the bearing bush (2) and the pin (1), with
- a sealing body (7) which is connected to the pin (1) in a sealing manner and for conjoint rotation,
- a first sealing edge (13) which runs on a first run-on surface (16) in the inner region of the bearing bush (2),
- a second sealing edge (14) which runs on a second run-on surface (17) in the outer region of the bearing bush (2),
**characterized in that** there is a third sealing edge (15) which runs on a third run-on surface (19) which is formed on a machine part (6) connected non-rotatably to the bearing bush (2).

2. Device according to Claim 1, **characterized in that** the machine part (6) is supported on the bearing bush (2) in a form-fitting manner in the axial direction.

3. Device according to one of the preceding claims, **characterized in that** the machine part (6) forms an axial stop for an elastic element (5), against which rolling bodies (3) arranged between the pin (1) and the bearing bush (2) run.

4. Device according to one of the preceding claims, **characterized in that** the machine part (6) is manufactured from sheet metal.

5. Device according to one of the preceding claims, **characterized in that** the machine part (6) is designed as a ring with an axial depression.

6. Device according to one of the preceding claims, **characterized in that** the machine part (6) has a U-shaped cross section.

7. Device according to one of the preceding claims, **characterized in that** the machine part (6) is arranged axially next to the sealing body (7).

8. Device according to one of Claims 5 to 7, **characterized in that** the depression of the machine part (6) is open towards the sealing body (7).

9. Device according to one of Claims 5 to 8, **characterized in that** the third run-on surface (19) is formed in the interior of the depression of the machine part (6).

10. Device according to Claim 9, **characterized in that** the third run-on surface (19) is formed on a side wall (20) radially inwardly delimiting the depression of the machine part (6).

11. Device according to one of the preceding claims, **characterized in that** the second run-on surface (17) is formed in an encircling radial groove (18) on the outer circumferential surface of the bearing bush (2).

12. Device according to one of the preceding claims, **characterized in that** the first sealing edge (13), second sealing edge (14) and third sealing edge (15) are formed integrally with the sealing body (7).

13. Device according to one of the preceding claims, **characterized in that** the first sealing edge (13), second sealing edge (14) and third sealing edge (15) are each integrally formed on a sealing lip (10, 11, 12) formed separately on the sealing body (7).

14. Device according to one of the preceding claims, **characterized in that** the sealing body (7) is connected to a supporting element (8).

15. Device according to Claim 14, **characterized in that** the supporting element (8) surrounds the sealing body (7) at least in regions on the side thereof facing the surroundings.

16. Device according to either of Claims 14 and 15, **characterized in that** the supporting element (8) has a substantially U-shaped cross section.

17. Device according to one of the preceding claims, **characterized in that** the sealing body (7) is arranged on a cylindrically formed section of the pin (1).

18. Device according to one of Claims 1 to 16, **characterized in that** the sealing body (7) sits on a conical section of the pin (1) by means of two annularly encircling extensions (23) integrally formed on the sealing body (7).

19. Universal joint with devices which each have a pin (1) mounted rotatably in a bearing bush (2), and a sealing arrangement, **characterized in that** the devices are each formed according to one of the preceding claims.

## Revendications

1. Dispositif comprenant un manchon de palier (2), un tourillon (1) monté à rotation dans le manchon de palier (2) et un agencement d'étanchéité pour l'étanchéité d'un interstice (9) entre le manchon de palier (2) et le tourillon (1), comprenant :
- un corps d'étanchéité (7), qui est connecté de manière hermétique et solidaire en rotation au tourillon (1),
- une première arête d'étanchéité (13) qui bute contre une première surface d'arrêt (16) dans la région intérieure du manchon de palier (2),
- une deuxième arête d'étanchéité (14) qui bute contre une deuxième surface d'arrêt (17) dans la région extérieure du manchon de palier (2),
**caractérisé en ce qu'**une troisième arête d'étanchéité (15) est prévue, laquelle bute contre une troisième surface d'arrêt (19) qui est réalisée sur une partie de machine (6) connectée de manière solidaire en rotation au manchon de palier (2).

2. Dispositif selon la revendication 1, **caractérisé en ce que** la partie de machine (6) s'appuie dans la direction axiale par engagement par coopération de forme sur le manchon de palier (2).

3. Dispositif selon l'une quelconque des revendications précédentes, **caractérisé en ce qu'**une butée axiale pour un élément élastique (5) est réalisée par la partie de machine (6), contre laquelle butent des corps de roulement (3) disposés entre le tourillon (1) et le manchon de palier (2).

4. Dispositif selon l'une quelconque des revendications précédentes, **caractérisé en ce que** la partie de machine (6) est fabriquée en tôle.

5. Dispositif selon l'une quelconque des revendications précédentes, **caractérisé en ce que** la partie de machine (6) est réalisée sous la forme d'une bague avec un renfoncement axial.

6. Dispositif selon l'une quelconque des revendications précédentes, **caractérisé en ce que** la partie de machine (6) présente une section transversale en forme de U.

7. Dispositif selon l'une quelconque des revendications précédentes, **caractérisé en ce que** la partie de machine (6) est disposée axialement à côté du corps d'étanchéité (7).

8. Dispositif selon l'une quelconque des revendications 5 à 7, **caractérisé en ce que** le renfoncement de la partie de machine (6) est ouvert vers le corps d'étanchéité (7).

9. Dispositif selon l'une quelconque des revendications 5 à 8, **caractérisé en ce que** la troisième surface d'arrêt (19) est réalisée à l'intérieur du renfoncement de la partie de machine (6).

10. Dispositif selon la revendication 9, **caractérisé en ce que** la troisième surface d'arrêt (19) est réalisée sur une paroi latérale (20) limitant radialement vers l'intérieur le renfoncement de la partie de machine (6).

11. Dispositif selon l'une quelconque des revendications précédentes, **caractérisé en ce que** la deuxième surface d'arrêt (17) est réalisée dans une rainure radiale (18) entourant la surface d'enveloppe extérieure du manchon de palier (2).

12. Dispositif selon l'une quelconque des revendications précédentes, **caractérisé en ce que** la première (13), deuxième (14) et troisième (15) arête d'étanchéité sont réalisées d'une seule pièce avec le corps d'étanchéité (7).

13. Dispositif selon l'une quelconque des revendications précédentes, **caractérisé en ce que** la première (13), deuxième (14) et troisième (15) arête d'étanchéité sont façonnées à chaque fois sur une lèvre d'étanchéité (10, 11, 12) réalisée séparément sur le corps d'étanchéité (7).

14. Dispositif selon l'une quelconque des revendications précédentes, **caractérisé en ce que** le corps d'étanchéité (7) est connecté à un élément de support (8).

15. Dispositif selon la revendication 14, **caractérisé en ce que** l'élément de support (8) entoure au moins en partie le corps d'étanchéité (7) sur son côté tourné vers l'environnement.

16. Dispositif selon l'une quelconque des revendications 14 ou 15, **caractérisé en ce que** l'élément de support (8) présente une section transversale essentiellement en forme de U.

17. Dispositif selon l'une quelconque des revendications précédentes, **caractérisé en ce que** le corps d'étanchéité (7) est disposé sur une portion du tourillon (1) de forme cylindrique.

18. Dispositif selon l'une quelconque des revendications 1 à 16, **caractérisé en ce que** le corps d'étanchéité (7) repose avec deux saillies (23) périphériques annulaires façonnées sur le corps d'étanchéité (7) sur une portion conique du tourillon (1).

19. Joint à croisillons comprenant des dispositifs qui présentent chacun un tourillon (1) monté à rotation dans un manchon de palier (2) et un agencement d'étanchéité, **caractérisé en ce que** les dispositifs sont réalisés à chaque fois selon l'une quelconque des revendications précédentes.
